# EUROPEAN PATENT SPECIFICATION

(11) **EP 0 366 433 B1**
(45) Date of publication and mention of the grant of the patent: **27.11.1996**
(21) Application number: 89310981.9
(22) Date of filing: 25.10.1989
(51) Int. Cl.: G06F 13/36, G06F 15/16

(54) **Multiprocessor interlock**
Gegenseitige Verriegelung für ein Multiprozessorsystem
Entrelacement pour un système multiprocesseur

(30) Priority: 25.10.1988 US 262475
(43) Date of publication of application: 02.05.1990
(73) Proprietor: Hewlett-Packard Company, Palo Alto, California 94304 (US)
(72) Inventor: Bahr, Richard G., Cambridge Massachusetts 02139 (US); Milia, Andrew, Burlington Massachusetts 01803 (US); Flahive, Barry F., Westford Massachusetts 01886 (US)
(74) Representative: Arthur, Bryan Edward

(56) References cited:
- EP-A- 0 094 841
- EP-A- 0 130 593
- GB-A- 2 044 499
- GB-A- 2 188 177

## Description

### FIELD OF INVENTION

The present invention relates to multiprocessor computing systems having processor interlocks, in particular to computing systems having fair access to exclusion locks.

### BACKGROUND OF THE INVENTION

A multiprocessor system requires a manner of granting, to one processor at a time, exclusive access to protected resources. In a bus-based multiprocessor, a frequent approach is to augment the system bus protocol. This approach is popular because the system bus must already have a method of arbitrating among the processors, requiring only the expression of arbitration commands through the instruction set.

A variation on this bus access technique is to allow a "winning" processor to stop all other bus activity until that processor is finished with its accesses. This approach certainly provides the basis for mutual exclusion, but in inhibiting all bus activity, the approach can significantly degrade system performance. This can be compensated for somewhat by permitting only the simplest of actions while arbitration is frozen: for example, "test and set". A second disadvantage of this approach is that only one lock can exist at a time.

More sophisticated locking techniques use the bus arbitration protocol only as a means of allowing one contender at a time access to a "lock" resource that once secured, cannot be acquired by a second processor. In other words, the bus arbitration mechanism is only the doorway to the resource lock, and there may actually be multiple locks, each securing a of different representative resources.

If there is to be a system bus lock that can be held by only one processor at a time, the natural question is how to ensure fairness in the competition for acquiring the lock. One method is to rely upon the basic fairness of the bus' primary arbitration method. However, this approach has two shortcomings. The first is that securing the bus may not necessarily assure securing the lock. This can result in significant bus time wasted in lock acquisition retries. The second shortcoming is that because the bus lock holding period may extend over many bus arbitration cycles, any fairness guarantees that the primary bus arbitration protocol can offer has been lost. One manner of solving both these problems is to use a random and infrequent retry.

### SUMMARY OF THE INVENTION

The apparatus of the invention provides a multiprocessor system having a deterministic fair access to mutual exclusion (mutex) locks upon a common pathway to memory referred to as the system bus.

As previously mentioned this protocol is deterministic. This protocol avoids wasting bus bandwidth on lock acquisition retry by simply inhibiting processors from requesting the bus while a lock is held. This protocol achieves fairness in obtaining locks by requiring previous lock holders to defer to subsequent requesters. This deference to the subsequent requesters guarantees that no one processor may iteratively reacquire a bus lock without allowing others an opportunity.

### BRIEF DESCRIPTION OF THE DRAWINGS

These and other features of the present invention will be better understood by reading the following detailed description taken together with the drawing, wherein:
Fig. 1 is a block diagram of an exemplary including a plurality of processors connected to a bus for access to a common memory;
Fig. 2 is a block diagram of the interconnection of one embodiment of the lock acquisition and bus arbitration blocks of the bus interface;
Fig. 3 is a schematic diagram having further detail of the lock acquisition and requesting blocks 74 and 72 of the embodiment of Figs. 1 and 2; and
Fig. 4 is further detail of the bus arbitration block 75 of the bus interface of the embodiment of Figs. 1 and 2.

### DETAILED DESCRIPTION OF THE INVENTION

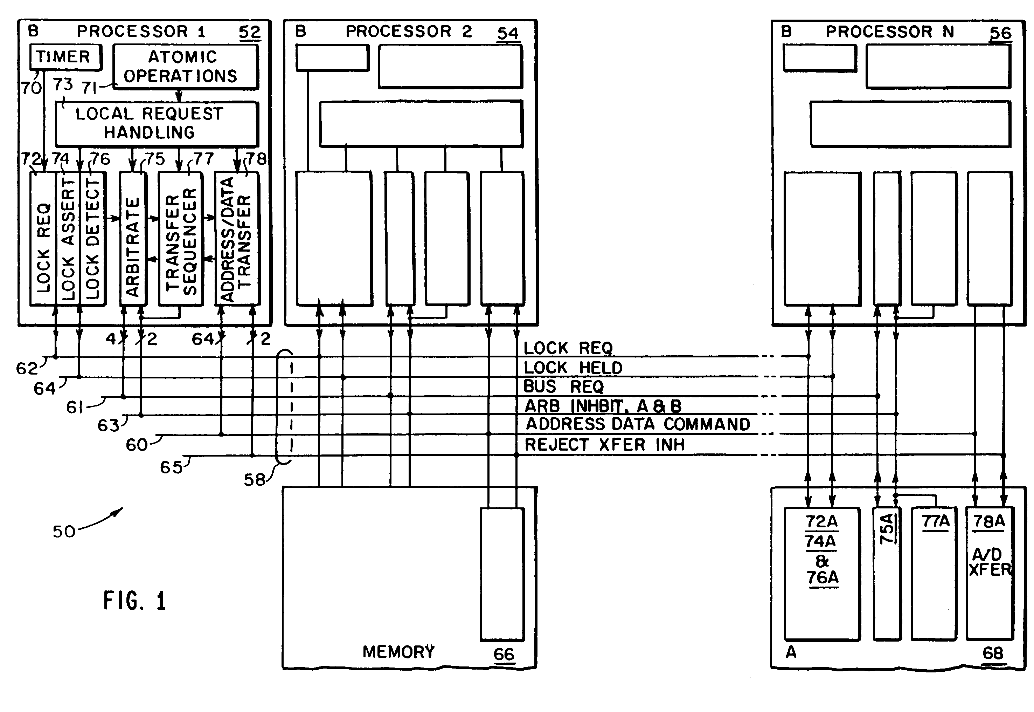

As shown in Fig 1, two system bus 58 signals are devoted for every mutex lock to which the processors 52, 54 and 56 have access. The first signal on lead 64 called LOCK HELD is asserted (e.g. by element 72) whenever the affiliated mutex lock is held. The second signal on lead 62 called LOCK_REQUEST is asserted typically whenever one of the processors that does not currently hold the affiliated lock, desires it. The signals are assumed to be logically or connected and driven directly by each of the processors 52, 54 and 56. The corresponding exempt instruction code technique used to initiate a mutex lock is provided in U.S. Patent No. 5,175,829, issued 29th December 1992, entitled METHOD AND APPARATUS FOR BUS LOCK DURING ATOMIC COMPUTER OPERATIONS.

The protocol of the signal provides that whenever a processor, e.g. 52, wants to secure a mutex lock, and both the affiliated LOCK_HELD and LOCK_REQUEST signals are unasserted, that processor is the sole unit which arbitrates for the bus. If the processor 52 secures the bus, and the LOCK_HELD signal is still not asserted, that processor may assert the LOCK_HELD signal by element 74 and be assured that it now is the exclusive holder of the lock. Once a processor (52) has asserted LOCK_HELD, it must cause its element 72 to deassert LOCK_REQUEST and commence data on instruction exchange via the address and data transfer element 78 and address and data leads 60.

In implementations having heavily overlapped bus arbitration protocols may result in the reporting of the lock acquisition by one processor too late to stop another from winning the bus. In that event, the winning processor may be "surprised" to find the LOCK_HELD signal asserted after winning the bus. In this overlapped protocol environment, the processors include instruction and execution log to back up and try again as though the first attempt never took place. Such processor logic and techniques are discussed in U.S. Patent No. 5,193,157 issued on 9th March 1993 entitled CENTRAL PROCESSOR CONDITION CODE METHOD AND APPARATUS, and U.S. Patent No. 5,193, 158 issued on 9th March 1993 entitled METHOD AND APPARATUS FOR EXCEPTION HANDLING IN PIPELINE PROCESSORS HAVING MISMATCHED INSTRUCTION PIPELINE DEPTHS, filed October 19, 1988. The present invention avoids this problem by having the locking processor inhibiting bus arbitration until it is certain that all other lock contenders will have seen the assertion of LOCK_HELD and withdrawn their arbitration bids.

The protocol also provides that whenever a processor wants to secure a mutex lock, and the affiliated LOCK_HELD signal is deasserted, but the LOCK_REQUEST signal is asserted or detailed by element 76, the action taken depends upon whether the processor had previously held the lock during the interval of time in which LOCK_REQUEST has been uninterruptively asserted. If the processor had not, it may proceed to arbitrate for the bus and should assert the LOCK_REQUEST signal. The processor should continue to assert LOCK_REQUEST until it succeeds in securing the lock, i.e., asserting LOCK_HELD. If however, the processor had held lock during that time, it must refrain from arbitrating for the bus until the LOCK_REQUEST signal is deasserted.

Furthermore, whenever a processor 52 wants to secure a mutex lock, such as a during atomic operation, and the affiliated LOCK_HELD signal is asserted, that processor refrains from bidding for the bus. Subsequently, if the LOCK_REQUEST signal is not asserted, or if the processor had not previously held the lock during the interval of time in which LOCK_REQUEST has been uninterruptively asserted, the processor will assert the affiliated LOCK_REQUEST and continue to do so until it succeeds in acquiring the lock or has lost interest in doing so. Secondly, if the LOCK_REQUEST signal is asserted, and the processor had previously held the lock during the interval of time in which LOCK_REQUEST has been uninterruptively asserted, the processor will just wait until the LOCK_REQUEST signal is again deasserted. It may vie for the lock at that time.

A processor that wishes to release a mutex lock may do so at any time simply by deasserting the affiliated LOCK_HELD signal.

Some alternate embodiments having pipelined bus protocols may result in busy retry of memory operations. In an environment such as this, if the unlock is intended to accompany a memory 66 transaction, then the LOCK_HELD signal should not be deasserted until the memory operation is certain to complete, or certain to fail.

The present invention provides several steps to be taken for deadlock avoidance. The nested acquisition of the same lock by same processor may simply proceed. Also, if a processor may successively acquire a number of locks, there should be a total (or specified) order upon the locks and the locks should always be acquired strictly in that order. Moreover, if a processor is currently holding a lock, it should begin a lock duration limit timer. Should that timer expire before the lock is released, all locks should be automatically abandoned and the owning processor interrupted. The duration of the timer should be set to several times the maximum interval that a lock, or succession of locks, might be held in a normally functioning system.

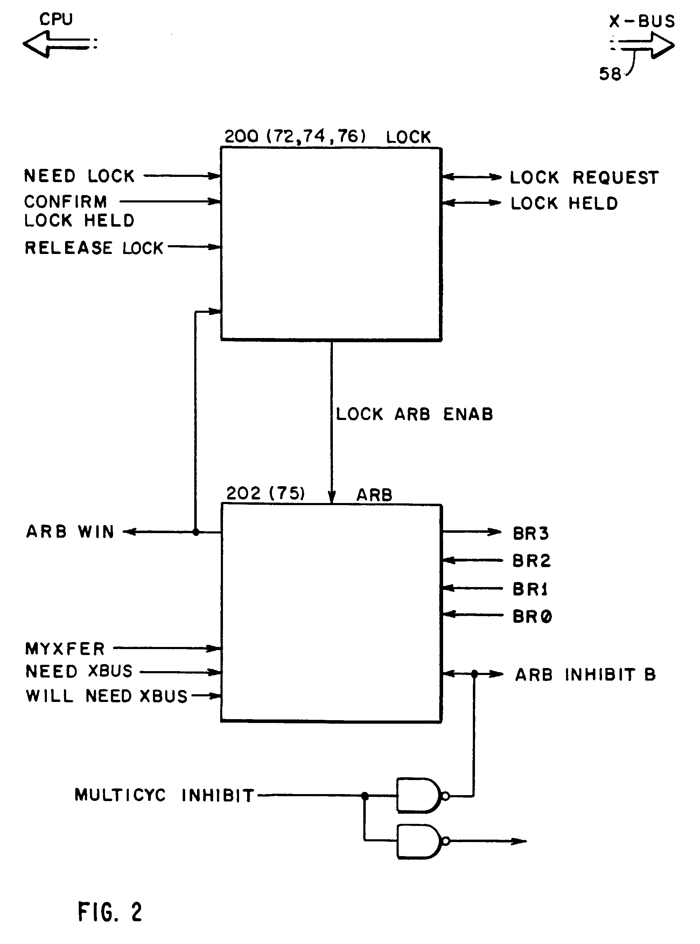

As shown in Fig. 2, the arbitration and lock control blocks of the bus interface attach to both the system's bus 58, and the processor's local request generation logic 73. A brief glossary of the signals generated or received by the local request generation logic follows:

NEED_LOCK is asserted to identify that the next processor read to be serviced requires the acquisition of the bus lock.

CONFIRM_LOCK_HELD is asserted to identify that the processor "read and lock" which just took place has been properly acknowledged on the bus. This signal handles the situation that a bus operation may fail to complete successfully even though arbitration succeeds.

RELEASE_LOCK is asserted when the processor wishes to abandon the bus lock. The processor chooses to do so when a "read and unlock" or "write and unlock" operation has been properly acknowledged on the bus. The processor may also choose to do so if there has been a local error such as lock holding duration timeout.

ARB_WIN is asserted by the bus arbitration logic 75 when the processor has been awarded the right to transfer on the bus 58.

MYXFER is asserted by the address/data transfer logic 78 of the bus interface when an address or data transfer is underway.

NEED_BUS is asserted by the processor when there is a pending and unserviced processor read or write.

WILL_NEED_BUS is asserted by the processor when there "will be" a pending read and unserviced read or write in the next cycle. The advance warning of the need for service permits the early assertion of a bus request signal.

MULTICYC_INHIBIT is asserted by the address/data transfer logic when a request is underway that requires the sustained and uninterrupted use of the bus.

Also as shown in Fig. 2, there are a number of bus control signals involved in the locking and arbitration proposal. A glossary follows:

LOCK_REQUEST- (62) is asserted by processor when it wishes access to the bus lock and is not blocked from acquiring the lock for fairness reasons.

LOCK_HELD- (64) is asserted by processor when it holds the bus lock.

BR3-, BR2-, BR1- and BR0- (61) are the four bus request lines associated with the four processors.

ARB_INHIBIT_B- (63B) is asserted when the "D" level bus requestors are to be inhibited from arbitrating for the bus.

ARB_INHIBIT_A- (63A) is asserted when the "A" level bus requestors are to be inhibited from arbitrating for the bus.

The signals LOCK_ARB_ENAB is asserted and driven by the lock acquisition and request block 202 (72) to the bus arbitration block (75) to indicate that a processor (52) request may proceed.

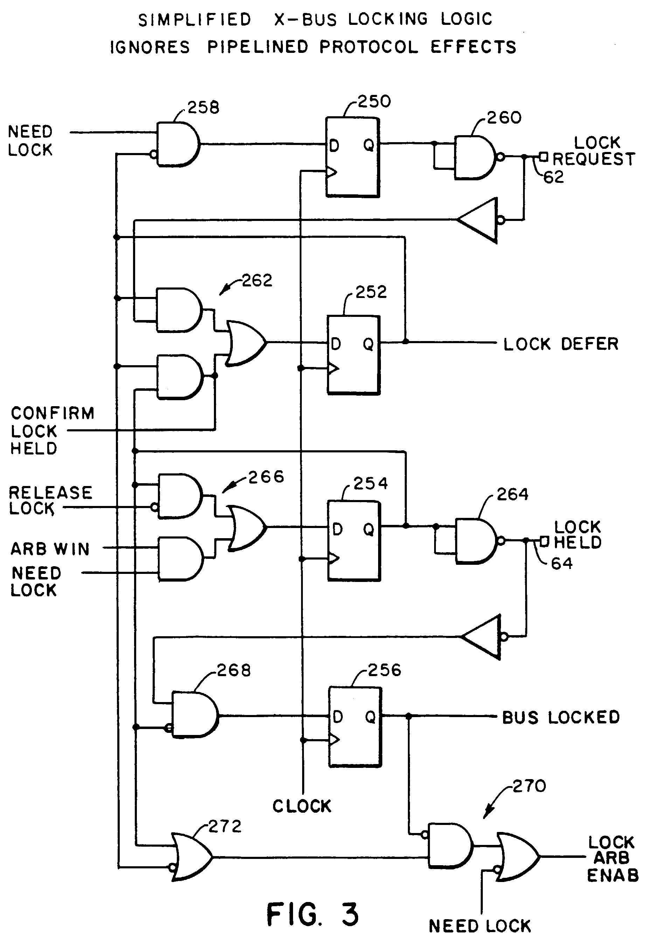

The lock arbitration and request block is shown in more detail in Fig. 3. There are four state elements: 250, 252, 254 and 256, which drive and interpret the bus control signals LOCK_REQUEST- and LOCK_HELD-. When the processor requires a bus lock, it indicates the need by asserting the signal NEED_LOCK. NEED_LOCK will cause the state element 250 to be set if not inhibited from doing so by state element 252 in gate 258. If 250 is set, gate 260 will drive the open collector signal LOCK_REQUEST- on the backplane. NEED_LOCK is assumed to be deasserted when the processor has been granted access to the bus so that the request is withdrawn at the correct time. State element 252 inhibits the assertion of LOCK_REQUEST- if this processor had once held the bus lock during the duration of time when LOCK_REQUEST- has been uninterruptively asserted, providing the basis for the fairness in the acquisition of the bus lock. LOCK_DEFER inhibits this processor from asserting the LOCK_REQUEST- signal, as well as inhibiting this processor from acquiring the bus as described in the next paragraph. This LOCK_DEFER situation as recorded in 252 is set when the CONFIRM_LOCK_HELD signal is presented to gate 262. Gate 262 also sustains the LOCK_DEFER situation for the duration of the assertion by this processor of LOCK_HELD by state element 254 and/or for the uninterrupted assertion of the external LOCK_REQUEST- signal. The open collector signal LOCK_HELD- is driven by gate 264 whenever state element 254 is set. The state element 254 is set when the processor is awarded the bus, i.e., ARB_WIN is asserted, and the processor needs the bus lock, i.e., NEED_LOCK is asserted. Gate 266 determines this. Gate 266 also sustains the lock holding until the RELEASE_LOCK signal is presented by the processor. State element 256 is set whenever the bus is locked for access by another processor. Gate 268 determines this situation by noting that the LOCK_HOLD- signal is asserted, but the local lock holding state element 254 is not set. When 256 is set, a lock requiring processor read cannot be allowed to proceed. This determination is made by the combination of the gates 270 and 272 and presented to the bus arbitration logic in the signal LOCK_ARB_ENAB. LOCK_ARB_ENAB is always set when the processor does not need the bus lock, i.e., NEED_LOCK is deasserted. Alternatively, LOCK_ARB_ENAB is set when the bus is not locked, i.e., state element 256 is not set and either of two conditions prevail according to gate 272. The first condition is simply that this processor already holds the bus lock, i.e., state element 254 is set. The second condition is that there is no lock acquisition fairness deference in effect, i.e., LOCK_DEFER driven by state element 252 is not asserted.

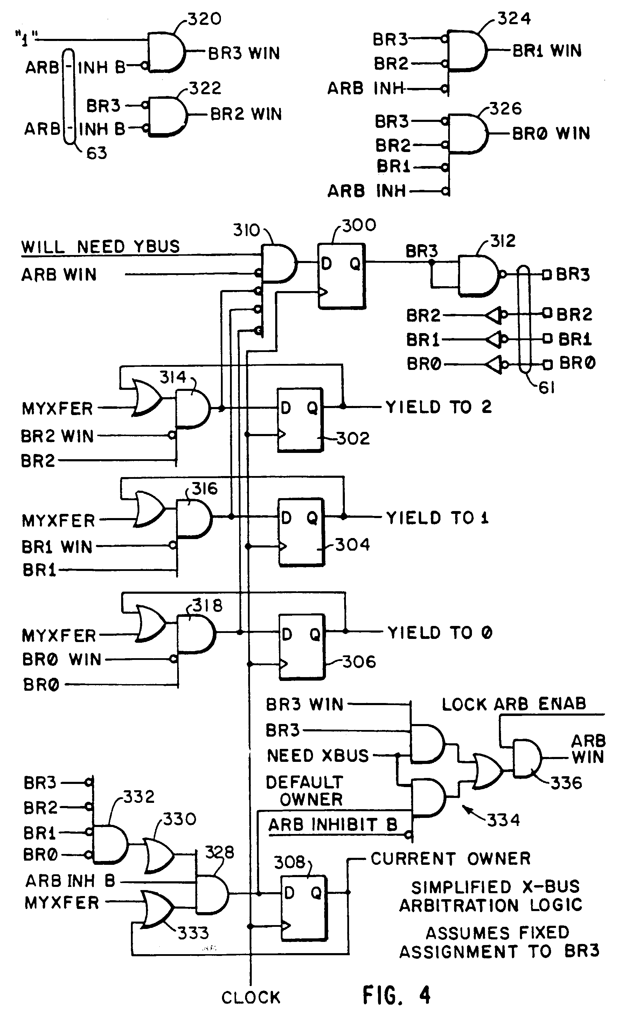

The bus arbitration and request block is shown in more detail in Fig. 4. For purposes of simplicity, this block is drawn as if the processor was permanently affixed to bus request level 3. In the actual implementation, additional logic is present to permit the processor to request at any level and can be provided according to the detail of Fig. 4. Also, the current implementation supports only 4 requestors, but there is no fundamental restriction in this number and a greater or lesser number may be accommodated. In the discussion to follow, "B level requesters" and "processors (52, 54, 56)" are to be considered synonymous. However, in other implementation that need not also be so.

In Fig. 4, there are five state elements: 300, 302, 304, 406 and 308, which drive and interpret the five bus control signals 61 BR3-, BR2-, BR1-, BR0 and ARB_INHIBIT_B-. State element 300 is the bus request flipflop. State elements 302, 304 and 306 snapshot the state of the other processor bus request signals to be used in the fairness deference algorithm of this processor. State element 308 is the record of whether this processor is the default owner of the bus.

Gates 320, 322, 324 and 326 determine if one of the four processors may secure the bus in the next cycle. BRO_WIN is asserted by gate 326 if all higher priority requests (BR3, BR2 and BR1) are not asserted, and B level request arbitration is not inhibited, i.e., ARB_INHIBIT_B is not asserted. Similarly, BR1_WIN is asserted by gate 324, BR2_WIN gate 322, and BR3_WIN by gate 320. The processor associated with request level three can only fail to win the bus if ARB_INHIBIT_B is asserted. ARB_INHIBIT_B- is asserted on the bus, by this processor or others, for one of two reasons. The first reason is that the current transfer requires multiple uninterrupted bus cycles. In that case, both ARB_INHIBIT_B- and ARB_INHIBIT_A- are driven by the address/data transfer block 78 to suspend all new arbitration for the bus. The second reason is that an "A" level requester wishes access to that bus. If any "A: level device requests the bus, that bus interface must also drive the signal ARB_INHIBIT_B- to suspend all "B" level device arbitration. In this manner, "A" level devices are assured total priority over "B" level ones.

The bus request flipflop 300 is set when the processor wishes to use the bus, i.e., WILL_NEED_BUS is asserted, and the processor has not just secured the use of the bus, i.e., ARB_WIN is not asserted, and the processor is not deferring to any of the other three processors. This combination of events is determined by gate 310. Once flipflop 300 is set, gate 312 unconditionally drives the bus signal BR3- so that other processors may decide arbitration as well. Bus request deference is in effect if any of the three signals driven by gates 314, 316 or 318 are asserted. Conceptually, these gates are asserted if the associated bus request signal is currently asserted and the requestor will not be serviced next, or if the associated bus request signal had been asserted when this processor had last transferred on the bus and there has been no service granted since that time. Specifically, gate 314, for example, will be asserted if BR2 is asserted and BR2 will not be granted the bus in the next cycle, i.e., BR2_WIN is not asserted, and one of two conditions prevail. The first condition is that the current bus cycle is owned by this processor, i.e., MYXFER is asserted. The second is that the state element 302 is set. The state element 302 is set if the condition of BR2 asserted and BR2_WIN not asserted was true at the time of the last bus operation by this processor. This combination of conditions assures that a processor will not reacquire the bus twice in succession without all other processor bus requesters having an opportunity to do so as well.

State element 308, CURRENT_OWNER, is set when this processor is the last one to transfer on the bus and the element remains set until another"B" level requester acquires the bus. Specifically, gate 328 will allow the element to be set if it is already set or the current transfer belongs to this processor( as decide by gate 333) and no other processor will acquire the bus in the next cycle. Other processors may not acquire the bus either because ARB_INHIBIT_B is asserted or because no other processor is requesting the bus. These events are combined in gate 330, with gate 332 detecting the absence of other "B" level requests.

Finally, ARB_WIN is asserted if this processor is granted access to the bus in the next cycle. Gate 336 drives the signal if there is the lock acquisition and request blocks 74 and 72 drive the LOCK_ARB_ENAB signal and the processor otherwise is awarded the bus. This qualification assures that a processor will not get access to a locked bus if the processor also requires lock acquisition. Gate 334 decides whether the processor is otherwise awarded the bus. The processor may be so awarded for two reasons. In the first case, it is awarded the bus if the bus is needed (NEED_BUS), the associated bus request line is asserted (BR3), and the bus prioritization logic says there is no higher priority requester (BR3_WIN). The second situation is the one of default ownership. Again, the bus must be needed (NEED_BUS), there must be on ARB_INHIBIT_B. In effect, and this processor is the default owner as already decided by gate 328. Gate 334 combines all of these events.

## Claims

1. A bus lock apparatus in a multiprocessor computer system having a bus for data and instruction transfer, and at least one requestable resource connected to said bus, wherein the bus lock apparatus comprises within each processor:
1) request means connected to said bus for requesting a bus lock permitting mutually exclusive transfer on said bus;
2) possession means connected to said bus for generating a signal that indicates winning and possession of said bus lock by a processor upon winning said bus lock;
3) detection means connected to said bus and responsive to said possession means, for receiving and detecting said signal that indicates winning and possession of said bus lock by a processor other than itself; and
4) halting means connected to said bus and to said possession means and responsive to said signal that indicates winning and possession of said bus lock, for halting activity of that processor's corresponding request means upon winning said bus lock and for initiating data and instruction transfer on said bus within each processor prevention means connected to and responsive to said halting means and said detection means for preventing processors other than a winning processor from requesting said bus lock until respective detection means of all processors other than the winning processor have detected possession of said bus lock by said winning processor and halted all activity of their respective request means; wherein said bus lock permitting mutually exclusive transfers on said bus is obtained by a processor having a respective request means being deasserted upon occurrence of a respective signal that indicates winning and possession of said bus lock as received by a respective detection means, and wherein said bus lock is released upon de-assertion of said respective signal that indicates winning and possession of said bus lock as received by detection means of other processors on said bus.

2. The apparatus of claim 1, characterised in that whenever a processor must gain possession of a bus lock that is not currently held by any processor, and the request means of at least one other processor is also requesting access to said lock, and if said processor was not previously in possession of the lock while the request means of a processor other than itself was uninterruptively asserted, the request means of said processor requests access to said bus lock until it wins the lock, or if said processor was previously in possession of the lock while the request means of a processor other than itself was uninterruptively asserted, the request means of said processor will refrain from requesting access to the lock until the request means of the other processor terminates its request for the lock.

3. The apparatus of claim 1, characterised in that each processor further comprises a lock duration timer, connected to said possession means, and which is activated upon possession of said bus lock and runs for a selected period, whereupon said timer interrupts said processor and whereupon said processor liberates said bus lock.

4. The apparatus of claim 1, characterised in that each processor in requesting said at least one requestable resource has available a plurality of bus lock intervals which are available according to a specified order, and in that a processor can only acquire said bus lock intervals according to said specified order.

## Patentansprüche

1. Bus-Verriegelungsgerät in einem Mehrprozessor-Rechnersystem, das einen Bus für Daten- und Befehlsübertragung und zumindest ein abrufbares Betriebsmittel aufweist, das mit dem genannten Bus verbunden ist, wobei das Bus-Verriegelungsgerät innerhalb jedes Prozessors aufweist:
1) ein Anfordermittel, das mit dem genannten Bus verbunden ist, um eine Busverriegelung anzufordern, die eine gegenseitig exklusive Übertragung auf dem genannten Bus ermöglicht;
2) ein Besitzmittel, das mit dem genannten Bus verbunden ist, um ein Signal zu erzeugen, das Gewinn und Besitz der genannten Busverriegelung durch einen Prozessor anzeigt, nachdem die genannte Busverriegelung gewonnen wurde;
3) ein Erkennungsmittel, das mit dem genannten Bus verbunden ist und auf das genannte Besitzmittel anspricht, um das genannte Signal zu empfangen und zu erkennen, welches Gewinn und Besitz der genannten Busverriegelung durch einen anderen Prozessor als ihn selbst anzeigt; und
4) ein Stoppmittel, das mit dem genannten Bus und dem genannten Besitzmittel verbunden ist und auf das genannte Signal anspricht, das Gewinn und Besitz der genannten Busverriegelung anzeigt, um die Tätigkeit des betreffenden Anfordermittels dieses Prozessors nach Gewinn der genannten Busverriegelung abzubrechen und die Daten- und Befehlsübertragung auf dem genannten Bus innerhalb jedes Prozessor-Verhinderungsmittels einzuleiten, das mit dem genannten Stoppmittel und dem genannten Erkennungsmittel verbunden ist und darauf anspricht, um zu verhindern, daß Prozessoren, außer einem gewinnenden Prozessor, die genannte Busverriegelung anfordern, bis betreffende Erkennungsmittel sämtlicher Prozessoren, außer dem gewinnenden Prozessor, den Besitz der genannten Busverriegelung durch den genannten gewinnenden Prozessor erkannt und sämtliche Tätigkeiten ihrer betreffenden Anfordermittel angehalten haben, wobei die genannte Busverriegelung, welche gegenseitig exklusive Übertragungen auf dem genannten Bus gestattet, durch einen Prozessor erhalten wird, dessen betreffendes Anfordermittel bei Auftreten eines betreffenden Signales geltungslos ist, welches Gewinn und Besitz der genannten Busverriegelung anzeigt und durch ein betreffendes Erkennungsmittel erhalten wird, und wobei die genannte Busverriegelung nach Geltungslosigkeit des genannten betreffenden Signales freigegeben wird, welches Gewinn und Besitz der genannten Busverriegelung anzeigt und durch Erkennungsmittel anderer Prozessoren an dem genannten Bus erhalten wird.

2. Gerät nach Anspruch 1, dadurch gekennzeichnet, daß, wann immer ein Prozessor den Besitz einer Busverriegelung erwerben muß, die derzeit nicht durch einen anderen Prozessor gehalten ist, und das Anfordermittel zumindest eines weiteren Prozessors ebenfalls Zugang zu der genannten Verriegelung fordert und wenn der genannte Prozessor nicht zuvor im Besitz der Verriegelung war, während das Anfordermittel eines Prozessors, außer ihm selbst, ununterbrochen in Geltung war, das Anfordermittel des genannten Prozessors den Zugang zu der genannten Busverriegelung fordert, bis es die Verriegelung gewinnt, oder, falls der genannte Prozessor zuvor im Besitz der Verriegelung war, während das Anfordermittel eines Prozessors, außer ihm selbst, ununterbrochen in Geltung war, das Anfordermittel des genannten Prozessors das Anfordern des Zugangs zu der Verriegelung unterläßt, bis das Anfordermittel des anderen Prozessors seine Forderung für die Verriegelung beendet.

3. Gerät nach Anspruch 1, dadurch gekennzeichnet, daß jeder Prozessor außerdem einen Zeitgeber für die Verriegelungsdauer besitzt, der mit dem genannten Besitzmittel verbunden ist und bei Besitz der genannten Busverriegelung aktiviert wird und über eine ausgewählte Zeitdauer läuft, wonach der genannte Zeitgeber den genannten Prozessor unterbricht und daraufhin der genannte Prozessor die genannte Busverriegelung freigibt.

4. Gerät nach Anspruch 1, dadurch gekennzeichnet, daß jeder Prozessor beim Anfordern des genannten zumindest einen anforderbaren Betriebsmittels eine Mehrzahl von Bus-Verriegelungsintervallen zur Verfügung hat, die entsprechend einer speziellen Abfolge erhältlich sind, und daß ein Prozessor die genannten Bus-Verriegelungsintervalle lediglich entsprechend der genannten speziellen Abfolge erwerben kann.

## Revendications

1. Dispositif de verrouillage de bus dans un système d'ordinateur à multi-processeur comprenant un bus pour le transfert des données et des instructions, et au moins une ressource pouvant être interrogée reliée audit bus, dans lequel le dispositif de verrouillage de bus comprend à l'intérieur de chaque processeur:
(1) des moyens d'interrogation reliés audit bus pour interroger un verrou de bus permettant le transfert exclusif mutuel sur ledit bus ;
(2) des moyens de possession reliés audit bus pour engendrer un signal qui indique le gain et la possession dudit verrou de bus par un processeur à la suite du gain dudit verrou de bus ;
(3) des moyens de détection reliés audit bus et répondant auxdits moyens de possession pour recevoir et détecter ledit signal qui indique le gain et la pqssession dudit verrou de bus par un processeur autre que lui-même ; et
(4) les moyens d'arrêt reliés audit bus et auxdits moyens de possession et répondant audit signal qui indique le gain et la possession dudit verrou de bus, pour arrêter l'activité de ces moyens d'interrogation correspondants du processeur après gain dudit verrou de bus et pour initier le transfert des données et des instructions sur ledit bus à l'intérieur de chaque moyen de prévention de processeur relié et répondant auxdits moyens d'arrêt et auxdits moyens de détection pour empêcher les processeurs autres qu'un processeur de gain d'interroger ledit verrou de bus jusqu'à ce que les moyens de détection respectifs de tous les processeurs autres que le processeur de gain aient détecté la possession dudit verrou de bus par ledit processeur de gain et arrêté toute activité de leurs moyens d'interrogation respectifs ; dans lequel ledit yerrou de bus permettant les transferts exclusifs mutuels sur ledit bus sont obtenus par un processeur comprenant des moyens d'interrogation respectifs qui sont désactivés lorsque se produit un signal respectif qui indique le gain et la possession dudit verrou de bus comme étant reçus par un moyen de détection respectif, et dans lequel ledit verrou de bus est libéré lors de la désactivation dudit signal respectif qui indique le gain et la possession dudit verrou de bus comme ayant été reçus par les moyens de détection des autres processeurs sur ledit bus.

2. Dispositif selon la revendication 1, caractérisé en ce que chaque fois qu'un processeur doit prendre possession d'un verrou de bus qui n'est pas couramment maintenu par aucun processeur, et que les moyens d'interrogation d'au moins un autre processeur demandent également l'accès audit verrou, et si ledit processeur n'était pas précédemment en possession du verrou alors que les moyens d'interrogation d'un processeur autre que lui-même étaient activés de façon ininterrompue, des moyens d'interrogation dudit processeur demandent l'accès audit verrou de bus jusqu'à ce qu'ils gagnent le verrrou, ou si ledit processeur était précédemment en possession du verrou alors que les moyens d'interrogation d'un processeur autre que lui-même étaient activés de façon ininterrompue, les moyens d'interrogation du processeur vont empêcher de demander l'accès au verrou jusqu'à ce que les moyens d'interrogation de l'autre processeur aient terminé leur demande pour le verrou.

3. Dispositif selon la revendication 1, caractérisé en ce que chaque processeur comprend en outre un temporisateur de durée de verrouillage relié auxdits moyens de possession, et qui est activé après possession dudit verrou de bus et fonctionne pendant une période sélectionnée, après quoi ledit temporisateur interrompt ledit processeur et en suite de quoi, ledit processeur libère ledit verrou de bus.

4. Dispositif selon la revendication 1, caractérisé en ce que chaque processeur lors de l'interrogation de ladite au moins une ressource pouvant être interrogée présente une pluralité d'intervalles de verrous de bus disponibles qui sont disponibles suivant un ordre spécifié, et dans lequel un processeur peut seulement acquérir lesdits intervalles de verrou de bus en conformité avec ledit ordre spécifié.
